(19) **Europäisches Patentamt / European Patent Office / Office européen des brevets**

(11) **EP 4 772 410 A1**

(12) **EUROPEAN PATENT APPLICATION**
published in accordance with Art. 153(4) EPC

(43) Date of publication:
08.07.2026 Bulletin 2026/28

(51) International Patent Classification (IPC):
*B60R 22/46* (2006.01)        *B60R 21/01* (2006.01)

(21) Application number: 24869922.5

(22) Date of filing: 28.06.2024

(86) International application number:
PCT/CN2024/102228

(87) International publication number:
WO 2025/066363 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.09.2023 CN 202311268378

(71) Applicant: Dongfeng Motor Group Co., Ltd.
Wuhan, Hubei 430056 (CN)

(72) Inventors:
• PENG, Gang
Wuhan, Hubei 430056 (CN)

• ZHANG, Peng
Wuhan, Hubei 430056 (CN)
• NIU, Sijie
Wuhan, Hubei 430056 (CN)
• ZHENG, Yandan
Wuhan, Hubei 430056 (CN)
• WANG, Heng
Wuhan, Hubei 430056 (CN)

(74) Representative: Gille Hrabal
Partnerschaftsgesellschaft mbB
Patentanwälte
Brucknerstraße 20
40593 Düsseldorf (DE)

(54) **ACTIVE AND PASSIVE SAFETY FUSION CONTROL METHOD AND SYSTEM**

(57)    Disclosed in the present invention are an active and passive safety fusion control method and system. The method comprises: collecting vehicle driving-related parameters, wherein the vehicle driving-related parameters comprise the speed of wheels, a transverse acceleration, a longitudinal acceleration, the rotation angle of a steering wheel, a yaw rate, a brake pedal signal and an accelerator pedal signal; on the basis of the vehicle driving-related parameters, determining a stability factor of each related control component in a vehicle; on the basis of the stability factor of each related control component, determining a stability factor of the whole vehicle; and on the basis of the stability factor of the whole vehicle, adjusting an active safety belt.

| | |
|---|---|
| collecting vehicle driving-related parameters | S101 |
| determining stability factors of each relevant control component in a vehicle based on the vehicle driving-related parameters | S102 |
| determining the stability factor of the whole vehicle based on the stability factors of each relevant control component | S103 |
| adjusting an active safety belt based on the stability factor of the whole vehicle | S104 |

Fig. 1

## Description

### Field of the Invention

The present application relates to the technical field of vehicle safety control, and in particular to an active and passive safety fusion control method and system.

### Background of the Invention

Active vehicle safety technology refers to devices and techniques installed in a vehicle that can proactively prevent the occurrence of safety accidents, such as an automatic emergency braking (AEB) system. Passive vehicle safety technology refers to safety devices and techniques that, after a traffic accident occurs, minimize injuries to drivers and passengers, such as electric safety belts and active hoods. Active and passive safety fusion technology refers to controlling passive safetyrelated configurations based on recognition of vehicle operating conditions and environmental conditions by active safety systems, thereby effectively enhancing vehicle safety performance.

In active and passive safety fusion technology, the cooperative operation of an automatic emergency braking (AEB) system and an electric safety belt is a typical example. Specifically, environment perception sensors combined with control signals from the AEB system selectively tighten or release the electric safety belt.

However, it has been found that this approach is primarily controlled by the AEB system, which generally performs emergency braking and controls safety belt tightening only when the vehicle is out of control. Therefore, the existing active and passive safety fusion technology cannot proactively identify abnormal vehicle states and cannot fully ensure the safety of drivers and passengers.

### Summary of the Invention

The present invention provides an active and passive safety fusion control method and system, through using vehicle driving-related parameters, comprising wheel speeds, a lateral acceleration, a longitudinal acceleration, a steering wheel angle, a yaw rate, a brake pedal signal and an accelerator pedal signal, the stability factor of the whole vehicle is calculated, and based on the stability factor of the whole vehicle, an active safety belt is adjusted so as to proactively recognize abnormal vehicle control scenarios and to protect occupants before the vehicle enters a dangerous situation, thereby solving or partially solving the technical problem in the prior art, in which active and passive safety fusion technology cannot proactively identify abnormal vehicle states, and improving the protection safety for vehicle occupants.

To solve the above technical problem, the first aspect of the present invention discloses an active and passive safety fusion control method, and the method comprises:

collecting vehicle driving-related parameters, wherein the vehicle driving-related parameters comprise wheel speeds, a lateral acceleration, a longitudinal acceleration, a steering wheel angle, a yaw rate, a brake pedal signal and an accelerator pedal signal;

determining stability factors of each relevant control component in a vehicle based on the vehicle driving-related parameters;

determining the stability factor of the whole vehicle based on the stability factors of each relevant control component; and

adjusting an active safety belt based on the stability factor of the whole vehicle.

Optionally, the stability factors of each relevant control component comprise: a stability factor of an anti-lock braking component, a stability factor of a traction control component, a stability factor of a yaw stability control component, a stability factor of a drag torque control component, and a stability factor of a rollover prevention control component.

Optionally, the step of determining the stability factors of each relevant control component in the vehicle based on the vehicle driving-related parameters specifically comprises:

calculating a speed of the whole vehicle based on the longitudinal acceleration and each wheel speed of the vehicle;

calculating real-time slip ratios of each wheel;

determining whether the vehicle driving-related parameters satisfy a first preset condition, wherein the first preset condition is that the speed of the whole vehicle is greater than a first vehicle speed threshold and the brake pedal signal indicates that a brake pedal is depressed;

upon satisfaction of the first preset condition, determining the slip ratio of the whole vehicle from the real-time slip ratios of each wheel, and determining the stability factor of the anti-lock braking component based on the slip ratio of the whole vehicle; wherein a mapping relationship between the slip ratio of the whole vehicle and the stability factor of the anti-lock braking component is $\begin{cases} \delta \leq A\%, & h_1 = 1 \\ \delta \geq B\%, & h_1 = 0 \\ A\% < \delta < B\%, & h_1 = (1 - \dfrac{\delta - A\%}{B\% - A\%}) \end{cases}$ ; wherein $\delta$ denotes the slip ratio of the

whole vehicle, $h_1$ denotes the stability factor of the anti-lock braking component, and $A\%$ and $B\%$ denote the end values of the slip ratio range required by the anti-lock braking component.

Optionally, the step of determining the stability factors of each relevant control component in the vehicle based on the vehicle driving-related parameters specifically comprises:

determining whether the vehicle driving-related parameters satisfy a second preset condition, wherein the second preset condition is that the accelerator pedal signal indicates that an accelerator pedal is depressed;
upon satisfaction of the second preset condition, determining the stability factor of the traction control component based on the slip ratio of the whole vehicle; wherein a mapping relationship between the slip ratio of the whole vehicle

and the stability factor of the traction control component is $\begin{cases} \delta \leq C\%, & h_2 = 1 \\ \delta \geq D\%, & h_2 = 0 \\ C\% < \delta < D\%, & h_2 = (1 - \dfrac{\delta - C\%}{D\% - C\%}) \end{cases}$ ; wherein $\delta$

denotes the slip ratio of the whole vehicle, $h_2$ denotes the stability factor of the traction control component, and $C\%$ and $D\%$ denote the end values of the slip ratio range required by the traction control component.

Optionally, the step of determining the stability factors of each relevant control component in the vehicle based on the vehicle driving-related parameters specifically comprises:

determining whether the vehicle driving-related parameters satisfy a third preset condition, wherein the third preset condition is that the speed of the whole vehicle is greater than a second vehicle speed threshold, the steering wheel angle is greater than a first preset steering angle threshold, the lateral acceleration is greater than a first preset lateral acceleration threshold, and the yaw rate is greater than a preset yaw rate threshold;
upon satisfaction of the third preset condition, determining the stability factor of the yaw stability control component based on the yaw rate; wherein a mapping relationship between the yaw rate and the stability factor of the yaw stability

control component is $\begin{cases} \omega \leq E, & h_3 = 1 \\ \omega \geq F, & h_3 = 0 \\ E < \omega < F, & h_3 = (1 - \dfrac{\omega - E}{F - E}) \end{cases}$ ; wherein $\omega$ denotes the yaw rate, $h_3$ denotes the stability

factor of the yaw stability control component, and $E$ and $F$ denote the end values of the yaw rate range required by the yaw stability control component.

Optionally, the step of determining the stability factors of each relevant control component in the vehicle based on the vehicle driving-related parameters specifically comprises:

determining whether the vehicle driving-related parameters satisfy a fourth preset condition, wherein the fourth preset condition is that the speed of the whole vehicle is greater than a third vehicle speed threshold, and the accelerator pedal signal and the brake pedal signal indicate that the pedals are not depressed;

upon satisfaction of the fourth preset condition, determining the stability factor of the drag torque control component based on the slip ratio of the whole vehicle; wherein a mapping relationship between the slip ratio of the whole vehicle and the stability factor of the drag torque control component is

$$\begin{cases} \delta \leq G\%, \ h_4 = 1 \\ \delta \geq H\%, \ h_4 = 0 \\ G\% < \delta < H\%, \ h_4 = (1 - \frac{\delta - G\%}{H\% - G\%}) \end{cases}$$ ; wherein $\delta$ denotes the slip ratio of the whole vehicle, $h_4$

denotes the stability factor of the drag torque control component, and $G\%$ and $H\%$ denote the end values of the slip ratio range required by the drag torque control component.

Optionally, the step of determining the stability factors of each relevant control component in the vehicle based on the vehicle driving-related parameters specifically comprises:

determining whether the vehicle driving-related parameters satisfy a fifth preset condition, wherein the fifth preset condition is that the speed of the whole vehicle is greater than a fourth vehicle speed threshold, the steering wheel angle is greater than a second preset steering angle threshold, and the lateral acceleration is greater than a second preset lateral acceleration threshold;

upon satisfaction of the fifth preset condition, determining the stability factor of the rollover prevention control component based on the lateral acceleration; wherein a mapping relationship between the lateral acceleration and the stability factor of the rollover prevention control component is

$$\begin{cases} \alpha_{lateral} \leq I, \ h_5 = 1 \\ \alpha_{lateral} \geq J, \ h_5 = 0 \\ I < \alpha_{lateral} < J, \ h_5 = (1 - \frac{\alpha_{lateral} - I}{J - I}) \end{cases}$$ ; wherein $\alpha_{lateral}$ denotes the lateral acceleration, $h_5$

denotes the stability factor of the rollover prevention control component, and $I$ and $J$ denote the end values of the lateral acceleration range required by the rollover prevention control component.

Optionally, the step of determining the stability factor of the whole vehicle based on the stability factors of each relevant control component specifically comprises:
determining a minimum stability factor from the stability factors of each relevant control component as the stability factor of the whole vehicle.

Optionally, the step of adjusting the active safety belt based on the stability factor of the whole vehicle specifically comprises:

determining a corresponding vehicle safety level based on the stability factor of the whole vehicle; and

adjusting the active safety belt according to the determined vehicle safety level.

The second aspect of the present invention discloses an active and passive safety fusion control system, and the system comprises:

a collection module, which is configured to collect vehicle driving-related parameters, wherein the vehicle driving-related parameters comprise wheel speeds, a lateral acceleration, a longitudinal acceleration, a steering wheel angle, a yaw rate, a brake pedal signal and an accelerator pedal signal;

a first determination module, which is configured to determine stability factors of each relevant control component in a vehicle based on the vehicle driving-related parameters;

a second determination module, which is configured to determine the stability factor of the whole vehicle based on the stability factors of each relevant control component; and

an adjustment module, which is configured to adjust an active safety belt based on the stability factor of the whole vehicle.

Through one or more of the technical solutions of the present invention, the present invention achieves the following beneficial effects or advantages:

in the solution of the present invention, the stability factor of the whole vehicle is gradually determined based on the vehicle driving-related parameters, and the active safety belt is adjusted according to the stability factor of the whole vehicle, so that abnormal vehicle out-of-control scenarios can be proactively identified and vehicle occupants can be protected before the vehicle enters a dangerous situation, thereby effectively improving protection safety for vehicle occupants.

The above description is only an overview of the technical solutions of the present invention, in order to more clearly understand the technical means of the present invention so that the present invention can be implemented according to the contents of the description, and in order to make the above and other objectives, features, and advantages of the present invention more apparent, specific embodiments of the present invention are described below.

**Brief Description of the Drawings**

Various other advantages and benefits will become apparent to those skilled in the art upon reading the detailed description of the preferred embodiments below. The drawings are provided only for the purpose of illustrating the preferred embodiments and are not intended to limit the present invention. Moreover, throughout the drawings, the same reference numerals denote the same components. In the figures:

Fig. 1 is a flowchart of an active and passive safety fusion control method in one embodiment of the present invention;

Fig. 2 is a schematic diagram of an active and passive safety fusion control system in one embodiment of the present invention.

**Detailed Description of the Embodiments**

The exemplary embodiments of the present invention will be described in more detail below with reference to the drawings. Although exemplary embodiments of the present invention are shown in the drawings, it should be understood that the present invention can be implemented in various forms and should not be limited to the embodiments described herein. On the contrary, these embodiments are provided so that the present invention can be more thoroughly understood and the scope of the present invention can be fully conveyed to those skilled in the art.

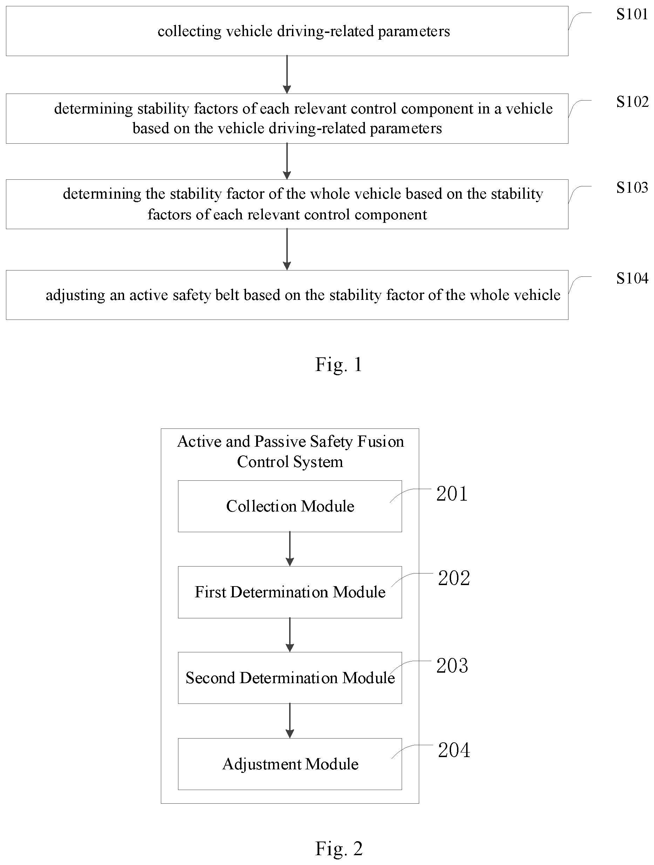

In a first aspect, as shown in Fig. 1, the active and passive safety fusion control method provided in the embodiments of the present specification comprises the following steps:

S101. Vehicle driving-related parameters are collected.

Specifically, the vehicle driving-related parameters are configured to characterize a vehicle driving state, and comprise: wheel speeds, a lateral acceleration, a longitudinal acceleration, a steering wheel angle, a yaw rate, a brake pedal signal and an accelerator pedal signal. During the collection process, the parameters are acquired by corresponding sensors. Exemplarily, the wheel speeds are collected by means of wheel speed sensors, and since the vehicle has four tires, the wheel speeds of the four tires are respectively collected; the lateral acceleration is collected by means of a lateral acceleration sensor and refers to the acceleration caused by centrifugal force when the vehicle is turning; the longitudinal acceleration is collected by means of a longitudinal acceleration sensor and refers to the axial acceleration of the vehicle; the steering wheel angle is collected by means of a steering wheel angle sensor and is configured to characterize a rotation angle of the steering wheel so as to determine a turning degree of the vehicle; the yaw rate is collected by means of a yaw rate sensor and refers to a lateral swinging angle of the vehicle during driving, and when the yaw rate is excessively large under a high-speed or sharp-turn condition, the vehicle body may lose control or even result in a rollover accident; and the brake pedal signal is collected by means of an acquisition device mounted on a brake pedal, and the accelerator pedal signal is collected by means of an acquisition device mounted on an accelerator pedal. It is noteworthy that different combinations of parameters can accurately reflect various actual driving states of the vehicle. Therefore, through collecting vehicle driving-related parameters, the actual driving state of the vehicle can be obtained, thereby enabling precise identification of abnormal vehicle out-of-control scenarios and avoiding misidentification.

A102. Stability factors of each relevant control component in a vehicle are determined based on the vehicle driving-related parameters.

The stability factors of each relevant control component comprise: a stability factor of an anti-lock braking component, a stability factor of a traction control (an anti-slip regulation) component, a stability factor of a yaw stability control component, a stability factor of a drag torque control component, and a stability factor of a rollover prevention control component. The stability factors are configured to denote the vehicle stability state in a tangible manner. The stability factors range from [0, 1]; wherein 0 indicates complete instability and 1 indicates complete stability; higher values indicate greater stability, and lower values indicate greater instability. The stability factors of each relevant control component denote the stability performances of the vehicle under different operating conditions. Exemplarily, the stability factor of the anti-lock braking component is configured to denote the vehicle stability state during an emergency braking process in a tangible manner. The stability factor of the rollover prevention control component is configured to denote the vehicle stability state under a rollover condition in a tangible manner.

The stability factors of different control components are determined by different combinations of parameters, and the determination of the stability factor of each relevant control component is described below.

Prior to the determination, the speed of the whole vehicle is calculated based on the longitudinal acceleration and the wheel speeds of the vehicle, followed by calculation of the real-time slip ratio of each wheel. The real-time slip ratio of each wheel is calculated according to the following formula: $s = \dfrac{u - u_i}{u} \times 100\%$ ; wherein $s$ denotes the real-time slip ratio, $u$ denotes the speed of the whole vehicle , and $u_i$ denotes the wheel speed of each wheel. It is noteworthy that the speed of the whole vehicle and the real-time slip ratio of each wheel can be calculated in advance and then adopted to determine the stability factor of each relevant control component; or calculated individually during the process of determining the stability factor of each relevant control component.

The stability factor of the anti-lock braking component is determined through performing the following steps: It is determined whether the vehicle driving-related parameters satisfy a first preset condition. The first preset condition is that the speed of the whole vehicle is greater than a first vehicle speed threshold and the brake pedal signal indicates that a brake pedal is depressed.

If the first preset condition is satisfied, indicating that the vehicle is about to enter an emergency braking state, a slip ratio of the whole vehicle is determined from the real-time slip ratios of each wheel. The slip ratio refers to the relative slip between the tire tread and the road surface during braking or acceleration while the vehicle travels in a straight line. Exemplarily, a slip ratio of 0 indicates that the distance traveled by the vehicle equals the distance traveled by the tire tread, while a slip ratio of 100% indicates that motion of any tire does not result in movement of the vehicle body. Since the slip ratio affects vehicle braking, a higher slip ratio indicates lower tire-road grip, which intensifies acceleration and braking effects on the vehicle. Therefore, the maximum slip ratio among the real-time slip ratios of all wheels is taken as the slip ratio of the whole vehicle to facilitate subsequent calculation of the stability factors of the anti-lock braking component, the traction control component, and the drag torque control component.

The slip ratio of the whole vehicle is then adopted to determine the stability factor of the anti-lock braking component.

The mapping relationship between the slip ratio of the whole vehicle and the stability factor of the anti-lock braking component is $\begin{cases} \delta \le A\%, \quad h_1 = 1 \\ \delta \ge B\%, \quad h_1 = 0 \\ A\% < \delta < B\%, \quad h_1 = (1 - \dfrac{\delta - A\%}{B\% - A\%}) \end{cases}$ ; wherein $\delta$ denotes the slip ratio of the whole vehicle, $h_1$ denotes the stability factor of the anti-lock braking component, and $A\%$ and $B\%$ denote the end values of the slip ratio range required by the anti-lock braking component. The slip ratio range required by the anti-lock braking component varies among different vehicle models, and the end values of the slip ratio range required by the anti-lock braking component can be set based on empirical values from actual driving conditions. Exemplarily, the required slip ratio range of the anti-lock braking component is 10% to 30%; accordingly, A is 10 and B is 30.

From the above mapping relationship, the slip ratio of the whole vehicle is negatively correlated with the stability factor of the anti-lock braking component, and as the slip ratio of the whole vehicle increases, the value of the stability factor of the anti-lock braking component decreases, indicating that the vehicle becomes less stable under an emergency braking condition. Similarly, as the slip ratio of the whole vehicle decreases, the value of the stability factor of the anti-lock braking component increases, indicating that the vehicle becomes more stable under the emergency braking condition.

The stability factor of the traction control component is determined through performing the following steps: It is determined whether the vehicle driving-related parameters satisfy a second preset condition. The second preset condition is that the accelerator pedal signal indicates that an accelerator pedal is depressed.

If the second preset condition is satisfied, indicating that the vehicle is about to enter an acceleration state, the stability factor of the traction control component is determined based on the slip ratio of the whole vehicle.

The mapping relationship between the slip ratio of the whole vehicle and the stability factor of the traction control

component is
$$\begin{cases} \delta \leq C\%, \quad h_2 = 1 \\ \delta \geq D\%, \quad h_2 = 0 \\ C\% < \delta < D\%, \quad h_2 = (1 - \dfrac{\delta - C\%}{D\% - C\%}) \end{cases}$$ ; wherein $\delta$ denotes the slip ratio of the whole vehicle, $h_2$

denotes the stability factor of the traction control component, and $C\%$ and $D\%$ denote the end values of the slip ratio range required by the traction control component. The slip ratio range required by the traction control component varies among different vehicle models, and the end values of the slip ratio range required by the traction control component can be set based on empirical values from actual driving conditions. Exemplarily, the required slip ratio range of the traction control component is 10% to 30%; accordingly, C is 10 and D is 30.

From the above mapping relationship, the slip ratio of the whole vehicle is negatively correlated with the stability factor of the traction control component, and as the slip ratio of the whole vehicle increases, the value of the stability factor of the traction control component decreases, indicating that the vehicle becomes less stable in an acceleration state. Similarly, as the slip ratio of the whole vehicle decreases, the value of the stability factor of the traction control component increases, indicating that the vehicle becomes more stable in the acceleration state.

The stability factor of the yaw stability control component is determined through performing the following steps: It is determined whether the vehicle driving-related parameters satisfy a third preset condition.

The third preset condition is that the speed of the whole vehicle is greater than a second vehicle speed threshold, the steering wheel angle is greater than a first preset steering angle threshold, the lateral acceleration is greater than a first preset lateral acceleration threshold, and the yaw rate is greater than a preset yaw rate threshold.

If the third preset condition is satisfied, indicating that the vehicle is in a turning state and a rollover accident may occur, the stability factor of the yaw stability control component is determined based on the yaw rate.

The mapping relationship between the yaw rate and the stability factor of the yaw stability control component is

$$\begin{cases} \omega \leq E, \quad h_3 = 1 \\ \omega \geq F, \quad h_3 = 0 \\ E < \omega < F, \quad h_3 = (1 - \dfrac{\omega - E}{F - E}) \end{cases}$$ ; wherein $\omega$ denotes the yaw rate, $h_3$ denotes the stability factor of the yaw stability control component, and $E$ and $F$ denote the end values of the yaw rate range required by the yaw stability control component. The yaw rate range required by the yaw stability control component varies among different vehicle models, and the end values of the yaw rate range required by the yaw stability control component can be set based on empirical values from actual driving conditions.

From the above mapping relationship, the yaw rate is negatively correlated with the stability factor of the yaw stability control component, and as the yaw rate increases, the value of the stability factor of the yaw stability control component decreases, indicating that the vehicle becomes less stable during turning and is more likely to cause the vehicle body loss of control or even a rollover accident. Similarly, as the yaw rate decreases, the value of the stability factor of the yaw stability control component increases, indicating that the vehicle becomes more stable during turning and safety accidents are less likely to occur.

The stability factor of the drag torque control component is determined through performing the following steps: It is determined whether the vehicle driving-related parameters satisfy a fourth preset condition.

The fourth preset condition is that the speed of the whole vehicle is greater than a third vehicle speed threshold, and the accelerator pedal signal and the brake pedal signal indicate that the pedals are not depressed.

If the fourth preset condition is satisfied, indicating that the vehicle is in a driving state, the slip ratio of the whole vehicle is adopted to determine the stability factor of the drag torque control component. Drag torque, as an important indicator of the vehicle brake caliper, if excessively high, can increase fuel consumption, damage components, and easily cause wheel lock-up.

The mapping relationship between the slip ratio of the whole vehicle and the stability factor of the drag torque control component is
$$\begin{cases} \delta \leq G\%, \quad h_4 = 1 \\ \delta \geq H\%, \quad h_4 = 0 \\ G\% < \delta < H\%, \quad h_4 = (1 - \dfrac{\delta - G\%}{H\% - G\%}) \end{cases}$$ ; wherein $\delta$ denotes the slip ratio of the

whole vehicle, $h_4$ denotes the stability factor of the drag torque control component, and $G$ % and $H$ % denote the end values of the slip ratio range required by the drag torque control component. The slip ratio range required by the drag torque control component varies among different vehicle models, and the end values of the slip ratio range required by the drag torque control component can be set based on empirical values from actual driving conditions. Exemplarily, the required slip ratio range of the drag torque control component is 10% to 30%; accordingly, G is 10 and H is 30.

From the above mapping relationship, the slip ratio of the whole vehicle is negatively correlated with the stability factor of the drag torque control component, and as the slip ratio of the whole vehicle increases, the stability factor of the drag torque control component decreases, indicating that the vehicle becomes less stable during operation. Similarly, as the slip ratio of the whole vehicle decreases, the value of the stability factor of the drag torque control component increases, indicating that the vehicle is more stable during operation.

The stability factor of the rollover prevention control component is determined through performing the following steps:

It is determined whether the vehicle driving-related parameters satisfy a fifth preset condition.

The fifth preset condition is that the speed of the whole vehicle is greater than a fourth vehicle speed threshold, the steering wheel angle is greater than a second preset steering angle threshold, and the lateral acceleration is greater than a second preset lateral acceleration threshold.

If the fifth preset condition is satisfied, indicating that the vehicle is at risk of rollover, the lateral acceleration is adopted to determine the stability factor of the rollover prevention control component. The mapping relationship between the lateral acceleration and the stability factor of the rollover prevention control component is

$$\begin{cases} \alpha_{lateral} \leq I, & h_5 = 1 \\ \alpha_{lateral} \geq J, & h_5 = 0 \\ I < \alpha_{lateral} < J, & h_5 = (1 - \frac{\alpha_{lateral} - I}{J - I}) \end{cases}$$ ; wherein $\alpha_{lateral}$ denotes the lateral acceleration, $h_5$ denotes

the stability factor of the rollover prevention control component, and $I$ and $J$ denote the end values of the lateral acceleration range required by the rollover prevention control component. The lateral acceleration range required by the rollover prevention control component varies among different vehicle models, and the end values of the lateral acceleration range required by the rollover prevention control component can be set based on empirical values from actual driving conditions.

From the above mapping relationship, the lateral acceleration is negatively correlated with the stability factor of the rollover prevention control component, and as the lateral acceleration increases, the value of the stability factor of the rollover prevention control component decreases, indicating that the vehicle is more prone to rollover. Similarly, as the lateral acceleration decreases, the value of the stability factor of the rollover prevention control component increases, indicating that the vehicle is less likely to rollover.

S103. The stability factor of the whole vehicle is determined based on the stability factor of each relevant control component.

The stability factor of the whole vehicle is configured to denote the vehicle stability state. The minimum stability factor is determined from the stability factor of each relevant control component as the stability factor of the whole vehicle, and the stability factor of the whole vehicle= min( $h_1$, $h_2$, $h_3$, $h_4$, $h_5$). Through using the stability factor corresponding to the most unstable vehicle state as the stability factor of the whole vehicle to adjust the active safety belt, the vehicle driving safety can be guaranteed to a maximum extent.

S104. An active safety belt is adjusted based on the stability factor of the whole vehicle.

During the adjustment process, a corresponding vehicle safety level is determined based on the stability factor of the whole vehicle; and the active safety belt is adjusted according to the vehicle safety level.

The adjustment state of the active safety belt tension comprises two levels: a first level 1 and a second level 2. When the adjustment state of the active safety belt is at the first level 1, the active safety belt is in a fixed state and does not accept adjustment. When the adjustment state of the active safety belt is at the second level 2, the active safety belt can accept adjustment.

The corresponding vehicle safety level is determined based on the stability factor of the whole vehicle. Specifically, the stability factor of the whole vehicle ranges from 0 to 1, and the vehicle safety level comprises three states: mild instability, moderate instability, and severe instability, with different stability states corresponding to different active safety belt adjustment forces. When the stability factor of the whole vehicle is within [$a_1$, 1], the corresponding vehicle safety level is mild instability; when the stability factor of the whole vehicle is within ($a_2$, $a_1$), the corresponding vehicle safety level is moderate instability; and when the stability factor of the whole vehicle is within [0, $a_2$], the corresponding vehicle safety level is severe instability. The specific correspondence is shown in Table 1.

Table 1

| Stability Factor Range of Whole Vehicle | $[a_1, 1]$ | $(a_2, a_1)$ | $[0, a_2]$ |
|---|---|---|---|
| Vehicle Safety Level | Mild Instability | Moderate Instability | Severe Instability |
| First Level 1 | F | F | F |
| Second Level 2 | F | $F \times (1+b_1)$ | $F \times (1+b_2)$ |

$a_2$ and $a_1$ denote the end values of the stability factor range of the whole vehicle. F denotes the normal tension force of the active safety belt. The active safety belt is adjusted according to the corresponding vehicle safety level. For example, if the adjustment state of the active safety belt is at the second level 2 and the vehicle safety level is moderate instability, the tension force of the active safety belt is adjusted as follows: $F \times (1+b_1)$ ; wherein $b_1 \geq 1$ and is a positive value, denoting the first tensioning ratio. For another example, if the adjustment state of the active safety belt is at the second level 2 and the vehicle safety level is severe instability, the tension force of the active safety belt is adjusted as follows: $F \times (1+b_2)$; wherein $b_2 > b_1$ and is a positive value, denoting the second tensioning ratio.

In this solution, the stability state of the whole vehicle is determined step by step based on the vehicle driving-related parameters to predict abnormal vehicle out-of-control scenarios. The active safety belt is adaptively adjusted according to different vehicle stability states, so that the tension force of the active safety belt changes with the vehicle stability. In this way, the vehicle occupants are protected before the vehicle enters a dangerous situation, thereby effectively improving the protection safety for vehicle occupants.

In a second aspect, based on the same inventive concept as the active and passive safety fusion control method provided in the first aspect, this embodiment further provides an active and passive safety fusion control system. As shown in Fig. 2, the system comprises:

a collection module 201, which is configured to collect vehicle driving-related parameters, wherein the vehicle driving-related parameters comprise wheel speeds, a lateral acceleration, a longitudinal acceleration, a steering wheel angle, a yaw rate, a brake pedal signal and an accelerator pedal signal;

a first determination module 202, which is configured to determine stability factors of each relevant control component in a vehicle based on the vehicle driving-related parameters;

a second determination module 203, which is configured to determine the stability factor of the whole vehicle based on the stability factors of each relevant control component; and

an adjustment module, which is configured to adjust an active safety belt based on the stability factor of the whole vehicle.

It should be noted that the active and passive safety fusion control system provided in the embodiment has each module perform operations in the specific manner already described in detail in the method embodiment of the first aspect. The specific implementation process can be referred to the method embodiment of the first aspect and will not be described in detail herein.

Even though the preferred embodiments of the present application have been described, those skilled in the art, once aware of the underlying inventive concept, can make various modifications and changes to these embodiments. Therefore, the appended claims are intended to be construed to comprise the preferred embodiments as well as all changes and modifications falling within the scope of the present application.

Obviously, those skilled in the art can make various modifications and variations to the present application without departing from its spirit and scope of the present application. Thus, in the event that these modifications and variations of the present application are within the protection scope of the claims and the equivalents thereof, the present application also intends to comprise such modifications and variations.

**Claims**

1. An active and passive safety fusion control method, comprising:

collecting vehicle driving-related parameters, wherein the vehicle driving-related parameters comprise wheel speeds, a lateral acceleration, a longitudinal acceleration, a steering wheel angle, a yaw rate, a brake pedal signal and an accelerator pedal signal;

determining stability factors of each relevant control component in a vehicle based on the vehicle driving-related parameters;

determining the stability factor of the whole vehicle based on the stability factors of each relevant control component; and

adjusting an active safety belt based on the stability factor of the whole vehicle.

2. The method according to claim 1, wherein the stability factors of each relevant control component comprise: a stability factor of an anti-lock braking component, a stability factor of a traction control component, a stability factor of a yaw stability control component, a stability factor of a drag torque control component, and a stability factor of a rollover prevention control component.

3. The method according to claim 2, wherein the step of determining the stability factors of each relevant control component in the vehicle based on the vehicle driving-related parameters specifically comprises:

calculating a speed of the whole vehicle based on the longitudinal acceleration and each wheel speed of the vehicle;

calculating real-time slip ratios of each wheel;

determining whether the vehicle driving-related parameters satisfy a first preset condition, wherein the first preset condition is that the speed of the whole vehicle is greater than a first vehicle speed threshold and the brake pedal signal indicates that a brake pedal is depressed;

upon satisfaction of the first preset condition, determining the slip ratio of the whole vehicle from the real-time slip ratios of each wheel, and determining the stability factor of the anti-lock braking component based on the slip ratio of the whole vehicle; wherein a mapping relationship between the slip ratio of the whole vehicle and the stability factor of the anti-lock braking component is $\begin{cases} \delta \le A\%, & h_1 = 1 \\ \delta \ge B\%, & h_1 = 0 \\ A\% < \delta < B\%, & h_1 = (1 - \dfrac{\delta - A\%}{B\%\text{-}A\%}) \end{cases}$ ; wherein $\delta$ denotes the

slip ratio of the whole vehicle, $h_1$ denotes the stability factor of the anti-lock braking component, and $A\%$ and $B\%$ denote the end values of the slip ratio range required by the anti-lock braking component.

4. The method according to claim 3, wherein the step of determining the stability factors of each relevant control component in the vehicle based on the vehicle driving-related parameters specifically comprises:

determining whether the vehicle driving-related parameters satisfy a second preset condition, wherein the second preset condition is that the accelerator pedal signal indicates that an accelerator pedal is depressed;

upon satisfaction of the second preset condition, determining the stability factor of the traction control component based on the slip ratio of the whole vehicle; wherein a mapping relationship between the slip ratio of the whole vehicle and the stability factor of the traction control component is $\begin{cases} \delta \le C\%, & h_2 = 1 \\ \delta \ge D\%, & h_2 = 0 \\ C\% < \delta < D\%, & h_2 = (1 - \dfrac{\delta - C\%}{D\%\text{-}C\%}) \end{cases}$ ;

wherein $\delta$ denotes the slip ratio of the whole vehicle, $h_2$ denotes the stability factor of the traction control component, and $C\%$ and $D\%$ denote the end values of the slip ratio range required by the traction control component.

5. The method according to claim 3, wherein the step of determining the stability factors of each relevant control component in the vehicle based on the vehicle driving-related parameters specifically comprises:

determining whether the vehicle driving-related parameters satisfy a third preset condition, wherein the third preset condition is that the speed of the whole vehicle is greater than a second vehicle speed threshold, the steering wheel angle is greater than a first preset steering angle threshold, the lateral acceleration is greater than a first preset lateral acceleration threshold, and the yaw rate is greater than a preset yaw rate threshold;

upon satisfaction of the third preset condition, determining the stability factor of the yaw stability control component based on the yaw rate; wherein a mapping relationship between the yaw rate and the stability factor of the yaw stability control component is
$$\begin{cases} \omega \le E, & h_3 = 1 \\ \omega \ge F, & h_3 = 0 \\ E < \omega < F, & h_3 = (1 - \dfrac{\omega - E}{F\text{-}E}) \end{cases}$$
; wherein $\omega$ denotes the yaw rate, $h_3$

denotes the stability factor of the yaw stability control component, and $E$ and $F$ denote the end values of the yaw rate range required by the yaw stability control component.

6. The method according to claim 3, wherein the step of determining the stability factors of each relevant control component in the vehicle based on the vehicle driving-related parameters specifically comprises:

determining whether the vehicle driving-related parameters satisfy a fourth preset condition, wherein the fourth preset condition is that the speed of the whole vehicle is greater than a third vehicle speed threshold, and the accelerator pedal signal and the brake pedal signal indicate that the pedals are not depressed;

upon satisfaction of the fourth preset condition, determining the stability factor of the drag torque control component based on the slip ratio of the whole vehicle; wherein a mapping relationship between the slip ratio of the whole vehicle and the stability factor of the drag torque control component is
$$\begin{cases} \delta \le G\%, & h_4 = 1 \\ \delta \ge H\%, & h_4 = 0 \\ G\% < \delta < H\%, & h_4 = (1 - \dfrac{\delta - G\%}{H\% - G\%}) \end{cases}$$
; wherein $\delta$ denotes the slip ratio of the whole vehicle,

$h_4$ denotes the stability factor of the drag torque control component, and $G\%$ and $H\%$ denote the end values of the slip ratio range required by the drag torque control component.

7. The method according to claim 3, wherein the step of determining the stability factors of each relevant control component in the vehicle based on the vehicle driving-related parameters specifically comprises:

determining whether the vehicle driving-related parameters satisfy a fifth preset condition, wherein the fifth preset condition is that the speed of the whole vehicle is greater than a fourth vehicle speed threshold, the steering wheel angle is greater than a second preset steering angle threshold, and the lateral acceleration is greater than a second preset lateral acceleration threshold;

upon satisfaction of the fifth preset condition, determining the stability factor of the rollover prevention control component based on the lateral acceleration; wherein a mapping relationship between the lateral acceleration and the stability factor of the rollover prevention control component is
$$\begin{cases} \alpha_{lateral} \le I, & h_5 = 1 \\ \alpha_{lateral} \ge J, & h_5 = 0 \\ I < \alpha_{lateral} < J, & h_5 = (1 - \dfrac{\alpha_{lateral} - I}{J - I}) \end{cases}$$
; wherein $\alpha_{lateral}$ denotes the lateral acceleration,

$h_5$ denotes the stability factor of the rollover prevention control component, and $I$ and $J$ denote the end values of the lateral acceleration range required by the rollover prevention control component.

8. The method according to claim 1, wherein the step of determining the stability factor of the whole vehicle based on the stability factors of each relevant control component specifically comprises:

determining a minimum stability factor from the stability factors of each relevant control component as the stability factor of the whole vehicle.

9. The method according to claim 1, wherein the step of adjusting the active safety belt based on the stability factor of the whole vehicle specifically comprises:

determining a corresponding vehicle safety level based on the stability factor of the whole vehicle; and adjusting the active safety belt according to the determined vehicle safety level.

10. An active and passive safety fusion control system, comprising:

a collection module, which is configured to collect vehicle driving-related parameters, wherein the vehicle driving-related parameters comprise wheel speeds, a lateral acceleration, a longitudinal acceleration, a steering wheel angle, a yaw rate, a brake pedal signal and an accelerator pedal signal;

a first determination module, which is configured to determine stability factors of each relevant control component in a vehicle based on the vehicle driving-related parameters;

a second determination module, which is configured to determine the stability factor of the whole vehicle based on the stability factors of each relevant control component; and

an adjustment module, which is configured to adjust an active safety belt based on the stability factor of the whole vehicle.

EP 4 772 410 A1

| collecting vehicle driving-related parameters | S101 |

↓

| determining stability factors of each relevant control component in a vehicle based on the vehicle driving-related parameters | S102 |

↓

| determining the stability factor of the whole vehicle based on the stability factors of each relevant control component | S103 |

↓

| adjusting an active safety belt based on the stability factor of the whole vehicle | S104 |

Fig. 1

Active and Passive Safety Fusion Control System

| Collection Module | 201 |

↓

| First Determination Module | 202 |

↓

| Second Determination Module | 203 |

↓

| Adjustment Module | 204 |

Fig. 2

## INTERNATIONAL SEARCH REPORT

| International application No. |
| --- |
| **PCT/CN2024/102228** |

**A.    CLASSIFICATION OF SUBJECT MATTER**

B60R22/46(2006.01)i;  B60R21/01(2006.01)i

According to International Patent Classification (IPC) or to both national classification and IPC

**B.    FIELDS SEARCHED**

Minimum documentation searched (classification system followed by classification symbols)

IPC:B60R

Documentation searched other than minimum documentation to the extent that such documents are included in the fields searched

Electronic data base consulted during the international search (name of data base and, where practicable, search terms used)

CNTXT, ENTXT, VEN: 东风汽车, 安全带, 预紧, 稳定系数, 稳定因数, 稳定因子, 滑移, 滑转, 轮速, 车速, 速度, 横向加速度, 横摆, 转角, 转向角, 踏板, 制动, 油门, 防抱死, 防滑, seatbelt, seat, belt, fasten+, stability, margin, factor?, slip+, speed, yaw, steering, angle, ABS

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 117325801 A (DONGFENG MOTOR GROUP CO., LTD.) 02 January 2024 (2024-01-02) claims 1-10 | 1-10 |
| A | CN 103635362 A (AUDI AG) 12 March 2014 (2014-03-12) description, paragraphs 13, 21, and 33-40, and figures 1-3 | 1-10 |
| A | CN 113147663 A (TIANJIN UNIVERSITY OF TECHNOLOGY AND EDUCATION (TEACHER DEVELOPMENT CENTER OF CHINA VOCATIONAL TRAINING AND GUIDANCE)) 23 July 2021 (2021-07-23) entire document | 1-10 |
| A | CN 108944910 A (GREAT WALL MOTOR CO., LTD.) 07 December 2018 (2018-12-07) entire document | 1-10 |
| A | CN 109895731 A (HYUNDAI MOTOR COMPANY et al.) 18 June 2019 (2019-06-18) entire document | 1-10 |
| A | KR 20130030415 A (MANDO CORP.) 27 March 2013 (2013-03-27) entire document | 1-10 |

☐ Further documents are listed in the continuation of Box C.        ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **18 September 2024** | **25 September 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/102228**

| Patent document cited in search report | | | Publication date (day/month/year) | Patent family member(s) | | | Publication date (day/month/year) |
|---|---|---|---|---|---|---|---|
| CN | 117325801 | A | 02 January 2024 | None | | | |
| CN | 103635362 | A | 12 March 2014 | ES | 2639049 | T3 | 25 October 2017 |
| | | | | EP | 2726329 | A1 | 07 May 2014 |
| | | | | EP | 2726329 | B1 | 09 August 2017 |
| | | | | WO | 2013004342 | A1 | 10 January 2013 |
| | | | | US | 2014263800 | A1 | 18 September 2014 |
| | | | | US | 9150194 | B2 | 06 October 2015 |
| | | | | DE | 102011106247 | A1 | 17 January 2013 |
| | | | | DE | 102011106247 | B4 | 28 May 2014 |
| CN | 113147663 | A | 23 July 2021 | None | | | |
| CN | 108944910 | A | 07 December 2018 | None | | | |
| CN | 109895731 | A | 18 June 2019 | KR | 20190068804 | A | 19 June 2019 |
| | | | | KR | 102626248 | B1 | 17 January 2024 |
| | | | | DE | 102018110365 | A1 | 13 June 2019 |
| | | | | DE | 102018110365 | B4 | 25 January 2024 |
| | | | | US | 2019176736 | A1 | 13 June 2019 |
| KR | 20130030415 | A | 27 March 2013 | None | | | |

Form PCT/ISA/210 (patent family annex) (July 2022)